# EUROPEAN PATENT APPLICATION

(11) **EP 1 787 868 A2**
(43) Date of publication of application: **23.05.2007**
(21) Application number: 06024244.3
(22) Date of filing: 22.11.2006
(51) Int. Cl.: B60R 13/04

(54) **Resin-made vehicular garnish structure and method for attaching the garnish structure**

(30) Priority: 22.11.2005 JP 2005337379; 27.12.2005 JP 2005375547
(71) Applicant: Honda Motor Co., Ltd., Minato-ku, Tokyo 107-8556 (JP)
(72) Inventor: Sase, Hiroyuki, Wako-shi Saitama (JP); Saitou, Kouji, Wako-shi Saitama (JP); Hirayama, Takakuni, Wako-shi Saitama (JP)
(74) Representative: Trossin, Hans-Jürgen

(57) **Abstract**

Resin-made garnish (21) has a convex outer surface (21a) and a concave reverse surface (21b). First adhering section (50) is provided on and along a peripheral edge section of the reverse surface and attached to a vehicle body by an adhesive (60a), and a second adhering section (55, 56) is attached to the vehicle body by an adhesive (60b) separately from the first adhering section. The garnish is formed into an elongated shape to extend along the outer surface of the vehicle body. Attaching member (112) is attached to a longitudinal end portion (25) of the garnish and vehicle body along the garnish's end portion. Thus, the garnish is attached to the vehicle body via the attaching member.

## Description

The present invention relates to a resin-made vehicular garnish structure including a resin-made garnish for attachment to a vehicle body as an exterior member of the vehicle and a method for attaching the resin-made vehicular garnish structure.

Among various types of vehicles (particularly, automotive vehicles) known today are a type equipped with a tailgate for opening/closing a rear section of the body of the vehicle (hereinafter referred to as "vehicle body"). The tailgate is pivotably mounted at its upper end portion to the vehicle body. The rear section of the vehicle body is openable/closable by the tailgate being pivotally moved with the tailgate's upper end portion functioning as a pivot axis.

In some cases, part of the vehicle tailgate is formed into a complicated shape or contour for enhancement of design quality (particularly, outer appearance) etc. of the vehicle. It is extremely difficult to form such a complicated contour part with a single glass sheet, and thus, a plurality of glass sheets are usually required to form such a complicated contour. Consequently, it would be difficult to sufficiently enhance the design quality (particularly, outer appearance) of the tailgate. Complicated contour part of the tailgate may be formed with a single steel sheet, which would however make it difficult to sufficiently enhance visibility of areas behind the vehicle body.

With a view to providing a solution to the aforementioned inconvenience, there has heretofore been proposed use of a resin-made garnish in a part of a tailgate having a complicated contour (see, for example, Japanese Patent Laid-Open Publication No. HEI-5-4520). In this case, the complicated contour part can be formed with a single resin-made garnish, so that the design quality of the tailgate can be enhanced to a sufficient degree. In addition, the resin-made garnish can be constructed as a transparent window section, through which areas behind the vehicle body can be viewed from inside the vehicle with an enhanced visibility.

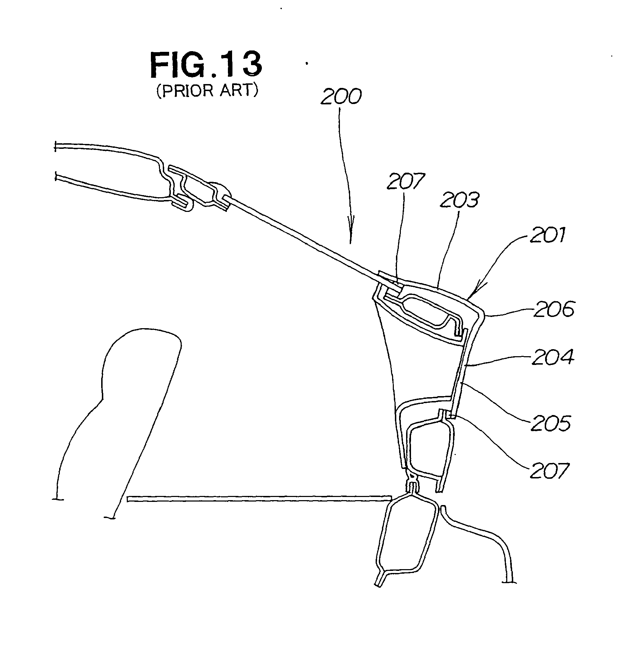

Fig. 13 is a sectional view showing the conventional resin-made garnish proposed in the aforementioned HEI-5-4520 publication. In the tailgate 200 shown in the HEI-5-4520pubhcation, there is incorporated the resin-made garnish 201. This resin-made garnish 201, having upper and lower half sections 203 and 204, can be formed into a relatively complicated shape, e.g. substantial "doglegged" (or substantial "L") shape. The resin-made garnish 201 is formed generally as a one-piece garnish, so that the tailgate 200 can have an enhanced design quality (particularly, improved outer appearance). Further, the resin-made garnish 201 has a transparent section 205 that may be located in any desired position of the garnish 201 and thus can be provided as a transparent window section. Through such a transparent window section provided in the resin-made garnish 201, areas behind the vehicle body can be viewed with an enhanced visibility. Further, according to the disclosure of the HEI-5-4520 publication, the resin-made garnish 201 incorporated in the tailgate 200 is secured along its peripheral edge directly to the body of the tailgate 200 by an adhesive 207.

However, where the resin-made garnish 201 has a relatively great size and/or has a particular shape, the garnish 201 may vibrate in its widthwise-middle portion (i.e., middle portion, in a vehicle's width direction, of the garnish 201) even though the peripheral edge section of the garnish 201 is adhered to the body of the tailgate 200, and noise sound may be produced due to the vibration of the resin-made garnish 201.

Further, because the resin-made garnish 201 is an elongated member extending in the width direction of the vehicle (or vehicle body), a manufacturing error tends to occur in longitudinal end portions of the garnish 201. If the resin-made garnish 201 has a manufacturing error in its longitudinal end portions, it becomes difficult to appropriately adhere the longitudinal end portions of the garnish 201 directly to the body of the tailgate 200. Thus, the operation for attaching the resin-made garnish 201 to the tailgate 200 would take much time and labor, which tends to significantly hinder enhancement of productivity.

In view of the foregoing prior art problems, it is a first object of the present invention to provide an improved resin-made vehicular garnish structure which can effectively prevent vibration of the resin-made garnish and thereby prevent noise sound that may be produced due to the vibration of the resin-made garnish.

It is a second object of the present invention to provide an improved resin-made vehicular garnish structure and garnish-attaching method which allow the resin-made garnish to be readily attached to the vehicle body without taking much time and labor.

In order to accomplish the above-mentioned first object, the present invention provides an improved resin-made vehicular garnish structure including a resin-made garnish for attachment to a vehicle body as an exterior member, in which the resin-made garnish has an outer surface formed convexly and facing outwardly of the vehicle body and a reverse surface formed concavely and facing inwardly of the vehicle body. The resin-made garnish has a first adhering section provided on and along a peripheral edge section of the reverse surface of the garnish, and the first adhering section is attached to the vehicle body by means of an adhesive. The resin-made garnish further has a second adhering section attached to the vehicle body by means of an adhesive at a position apart from the first adhering section provided on the peripheral edge section.

Where the resin-made garnish has a relatively great size and/or has a particular shape, the garnish may vibrate in its widthwise-middle portion even though the peripheral edge section of the garnish is adhered to the vehicle body. To avoid such an inconvenience, the resin-made garnish in the present invention includes the second adhering section provided, near the widthwise middle of the vehicle body, apart from the first adhering section that is provided on the peripheral edge section. With such a second adhering section provided near the widthwise middle of the vehicle body, the present invention can effectively prevent a widthwise-middle portion of the resin-made garnish from vibrating and thereby prevent noise sound that would be produced due to the vibration of the resin-made garnish.

In a preferred embodiment of the present invention, the resin-made garnish is an elongated member extending in a width direction of the vehicle body, and the second adhering section is provided on a substantial middle portion, in the width direction, of the resin-made garnish. Even if the resin-made garnish is an elongated member that extends in the width direction of the vehicle body and thus tends to vibrate in its widthwise-middle portion, the second adhering section, provided on the substantial widthwise-middle portion of the resin-made garnish, can reliably prevent vibration of the widthwise-middle portion of the resin-made garnish.

In a preferred embodiment of the present invention, the second adhering section extends parallel to part of the first adhering section. By just positioning the second adhering section parallel to part of the first adhering section, it is possible to secure a necessary length of adhesion, by the second adhering section, to the vehicle body, and thus, the resin-made garnish can be adhered, by the second adhering section, to the vehicle body appropriately with a sufficient strength so that it can be efficiently prevented from vibration.

In a preferred embodiment of the present invention, the second adhering section is provided at a plurality of positions of the resin-made garnish. In this way, the resin-made garnish can be adhered, by the second adhering section, to the vehicle body even more appropriately with an increased strength, so that vibration in the resin-made garnish can be prevented with an increased efficiency.

Further, in a preferred embodiment of the present invention, the resin-made garnish is formed of polycarbonate. In addition, the resin-made garnish has a surface-coating primer layer and surface-coating layer sequentially formed thereon, the resin-made garnish further has an adhesive-resistant primer layer formed on each of the first and second adhering sections on the reverse surface of the garnish, and the adhesives are interposed between the adhesive-resistant primer layer and the vehicle body.

In the resin-made garnish employed in the present invention, the outer surface of the garnish faces outwardly of the vehicle body, and thus, it is possible that the outer surface will deteriorate due to exposure to rain, wind, etc. The inner surface of the garnish, on the other hand, faces inwardly of the vehicle body and thus will not be exposed to rain and wind. Therefore, in the preferred embodiment, the surface-coating layer is formed only on the necessary portion, i.e. outer surface of the garnish, which can advantageously simplify the step of forming the coating layer.

In the resin-made garnish present invention, the first and second adhering sections are formed integrally on an opaque section of the resin-made garnish; that is, the first and second adhering sections are each made of polycarbonate as with the opaque section. Thus, if the adhesives are applied to the polycarbonate, the polycarbonate might liquefy with the adhesives.

To avoid the unwanted liquefying of the polycarbonate, the adhesive-resistant primer layer is formed on each of the first and second adhering sections, and the adhesives are interposed between the adhesive-resistant primer layer and the vehicle body. In this way, the unwanted liquefying of the first and second adhering sections can be reliably prevented, so that the adhesion, to the vehicle body, of the first and second adhering sections can be kept in stable condition.

In order to accomplish the above-mentioned second object, the present invention provides an improved resin-made vehicular garnish structure including a resin-made garnish for attachment to a vehicle body as an exterior member, in which the resin-made garnish is formed into an elongated shape so as to extend along an outer surface of the vehicle body, the resin-made vehicular garnish structure includes an attaching member formed, separately from the resin-made garnish, for attachment to both a longitudinal end portion of the resin-made garnish and the vehicle body, the attaching member being formed to extend along the longitudinal end portion of the resin-made garnish. Further, the resin-made garnish is attached to the vehicle body via the attaching member. Note that, in order to accomplish the second object of the invention, such an attaching member may be provided on at least one of the longitudinal end portions of the resin-made garnish.

Because the resin-made garnish is formed into an elongated shape so as to extend along the outer surface of the vehicle body, a manufacturing error tends to occur in the longitudinal end portions of the garnish, and, in addition, the longitudinal end portions of the garnish may be deformed with the passage of time. To avoid such inconveniences, the present invention is characterized in that the resin-made garnish is attached to the vehicle body via the attaching member. The provision, between the garnish and the vehicle body, of the attaching member, formed separately from the garnish and vehicle body, can effectively absorb a manufacturing error of the elongated resin-made garnish, using resiliency of the garnish etc. Thus, the attaching member can be readily positioned on the basis of the position and contour of the vehicle body. As a result, the present invention allows the operation for attaching the resin-made garnish to the vehicle body to be performed within a short period of time, thereby significantly enhancing the productivity.

Further, with the attaching member provided to extend, e.g. vertically, along the end portion of the resin-made garnish, the present invention can effectively prevent the resin-made garnish from being deformed in the end portion. In this way, the end portion of the garnish can be kept in a appropriate attached condition well fitting the contour of the vehicle component, so that the garnish can be reliably kept in a desired outer appearance.

In a preferred embodiment, the attaching member is attached, at a plurality of positions thereof along the longitudinal end portion, to the resin-made garnish and attached at one other position thereof to the vehicle body. Because the attaching member is attached, at its two or more positions along the longitudinal end portion, to the resin-made garnish, deformation of the longitudinal end portion of the garnish can be prevented even more reliably by the attaching member. Further, because the attaching member is attached at its one position to the vehicle body, the attaching member can be readily attached to the vehicle body without much time and labor taken.

In a preferred embodiment, the attaching member is attached to the vehicle body by means of a screw member, such as a bolt. Due to the elongated shape of the garnish, a manufacturing error tends to occur in the longitudinal end portion of the garnish, as discussed above in relation to the relevant prior art, which would result in undesired positional displacement, from the vehicle body, of the attaching member. This is why, in the present invention, the attaching member is attached to the vehicle body by means of the screw member. Even where a manufacturing error is present in the longitudinal end portion of the resin-made garnish, the end portion of the garnish can be appropriately drawn (or adjusted in position) toward the vehicle body by just adjusting the tightening force of the screw member. In this way, the present invention allows the resin-made garnish to be readily attached to the vehicle body without much time and labor taken.

In a preferred embodiment of the present invention, the attaching member has an engagement portion engaging with the resin-made garnish, and the attaching member is attached to the resin-made garnish by the engagement portion being caused to engage with the resin-made garnish. The provision of such an engagement portion allows the attaching member to be attached to the resin-made garnish with an even further enhanced ease.

Further, in the case where the resin-made garnish is formed into a relatively complicated contour and to be attached directly to the vehicle body, the operation for attaching the garnish to the vehicle body would take much time and labor, as discussed above. However, the present invention allows the garnish to be readily attached to the vehicle body without much time and labor taken, because, in the present invention, the attachment, to the vehicle body, of the garnish is via the attaching member. Thus, by the provision of the attaching member, the present invention permits the garnish to be formed into a complicated contour; for example, the outer surface of the resin-made garnish, facing outwardly of the vehicle body, may be formed generally convexly, while the inner or reverse surface of the garnish, facing inwardly of the vehicle body, may be formed generally concavely. Namely, even where the resin-made garnish has a complicated shape or contour with the outer surface formed generally convexly and the reverse surface formed generally concavely, the present invention, using the aforementioned attaching member, greatly facilitates the attachment of the garnish to the vehicle body.

According to another aspect of the present invention, there is provided an improved method for attaching a resin-made vehicular garnish structure including a resin-made garnish for attachment to a vehicle body as an exterior member, which comprises: a step of forming the resin-made garnish into an elongated shape so as to extend along an outer surface of the vehicle body; a step of forming an attaching member, separately from the resin-made garnish, so as to extend along a longitudinal end portion of the resin-made garnish; a step of attaching the attaching member to the resin-made garnish along the longitudinal end portion; and a step of attaching the attaching member to the vehicle body to thereby attach the resin-made garnish to the vehicle body via the attaching member. The provision, between the garnish and the vehicle body, of the attaching member separate from the garnish and vehicle body, can effectively absorb a manufacturing error of the resin-made garnish, using resiliency of the resin-made garnish etc.. Thus, the attaching member can be readily positioned on the basis of the position and contour of the vehicle body. As a result, the method of the present invention too allows the operation for attaching the resin-made garnish to the vehicle body to be performed within a short period of time, thereby significantly enhancing the productivity.

Certain preferred embodiments of the present invention will be described in detail below, by way of example only, with reference to the accompanying drawings, in which:
Fig. 1 is a rear perspective view of a vehicle provided with a resin-made vehicular garnish structure according to a first embodiment of the present invention;
Fig. 2 is an exploded rear perspective view of the resin-made vehicular garnish structure of the present invention;
Fig. 3 is a perspective view of the resin-made vehicular garnish structure of the present invention as viewed from the interior of a vehicle compartment;
Fig. 4 is a perspective view showing principal elements of the resin-made vehicular garnish structure of the present invention;
Fig. 5 is a sectional view taken along line 5 - 5 of Fig. 3;
Fig. 6 is a sectional view taken along line 6 - 6 of Fig. 3;
Fig. 7 is a sectional view taken along line 7 - 7 of Fig. 3;
Fig. 8A is a fragmentary enlarged view of a right end structure section indicated at 8a in Fig. 3, and Fig. 8B is a sectional view taken along line 8b - 8b of Fig. 8A;
Fig. 9 is a fragmentary enlarged view of a section indicated at 9 in Fig. 6;
Fig. 10 is an enlarged view showing a second embodiment of the present invention, which particularly shows a modified embodiment of the detailed construction employed in the right end structure section of Fig. 3;
Fig. 11 is an exploded perspective view of the right end structure section shown in Fig. 10;
Fig. 12A is a sectional view taken along line 12a - 12a of Fig. 10, and Fig. 12B is a sectional view taken along line 12b - 12b of Fig. 10; and
Fig. 13 is a sectional view showing a conventionally-known resin-made garnish.

First, it should be noted that the terms "front", "rear", "left" and "right" represent various directions as viewed from a human driver operating a vehicle and these directions are indicated by "Fr", "Rr", "L" and "R", respectively.

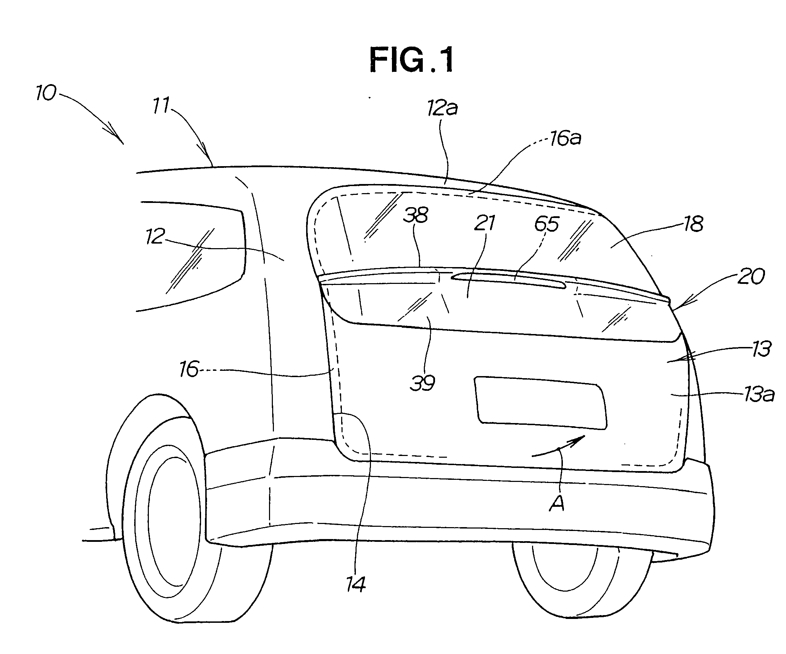

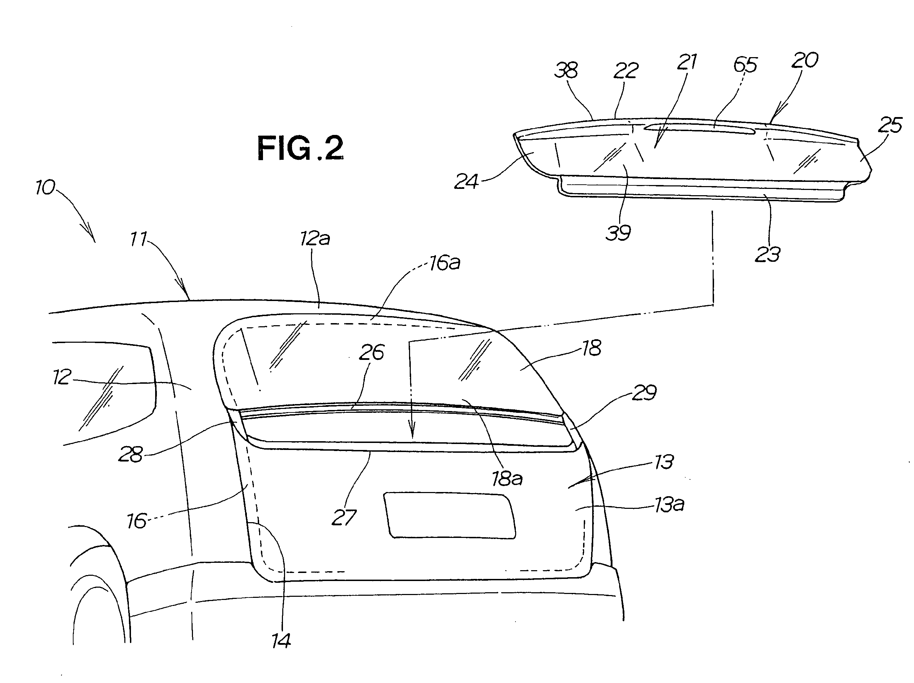

Fig. 1 is a rear perspective view of the vehicle provided with a resin-made vehicular garnish structure according to a first embodiment of the present invention, and Fig. 2 is an exploded rear perspective view of the vehicle provided with the resin-made vehicular garnish structure.

The vehicle 10 includes a tailgate 13 in a rear section 12 of a vehicle body 11 (hereinafter referred to as "rear vehicle body section 12"), and a tailgate opening 14 in the rear vehicle body section 12 is openable and closable by the tailgate 13.

As seen in Fig. 2, the tailgate 13 includes a tailgate frame 16 with its upper end portion 16a pivotally mounted via a hinge (not shown) to an upper end portion 12a in such a manner that the tailgate 13 is vertically pivotally movable about the hinge.

Further, in the tailgate 13, a tailgate windowpane 18 is fitted to an upper half section of the tailgate frame 16, and the resin-made vehicular garnish structure 20 is secured adjacent to a lower end portion of the tailgate windowpane 18. The resin-made vehicular garnish structure 20 is disposed in a substantial widthwise-middle portion (i.e., middle portion in a vehicle's width direction) of the tailgate 13. More specifically, the resin-made vehicular garnish structure 20 is disposed to extend in the vehicle's width direction along an outer surface 13a of the tailgate 13.

The tailgate 13 opens the tailgate opening 14, formed in the rear vehicle body section, by being caused to pivot upward about the not-shown hinge as indicated by arrow A, and it closes the tailgate opening 14 by being caused to pivot downward about the not-shown hinge.

The resin-made vehicular garnish structure 20 includes a resin-made garnish 21 secured to the tailgate frame 16.

As shown in Fig. 2, the resin-made garnish 21 is fixed at its upper end portion 22 to a middle upper frame member 26 of the tailgate frame 16, and fixed at its lower end portion 23 to a middle lower frame member 27 of the tailgate frame 16.

Further, the resin-made garnish 21 is fixed at its left end portion 24 to a left frame member 28 of the tailgate frame 16, and fixed at its right end portion 29 to a right frame member 29 of the tailgate frame 16.

The middle upper frame member 26, middle lower frame member 27, left frame member 28 and right frame member 29 are component parts of the vehicle body 11.

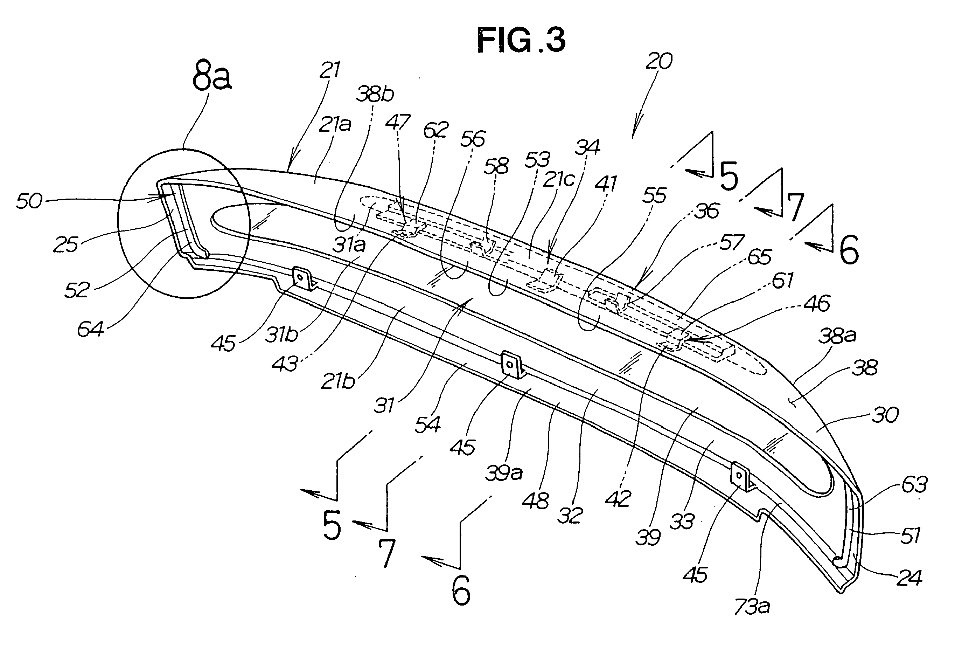

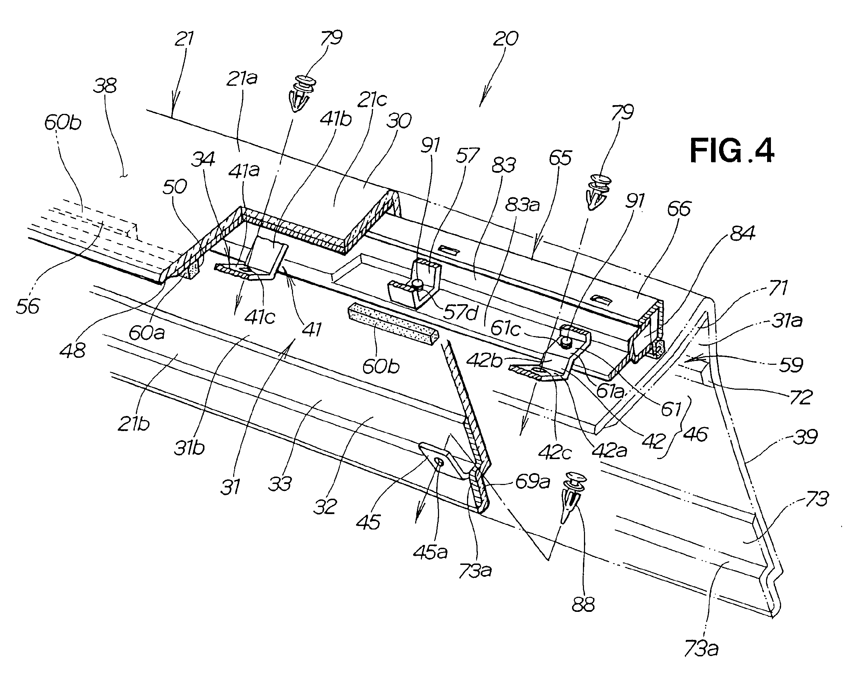

Fig. 3 is a perspective view of the resin-made vehicular garnish structure 20 of the present invention as viewed from inside a vehicle compartment, and Fig. 4 is a perspective view showing principal elements of the resin-made vehicular garnish structure 20.

As shown, in the resin-made vehicular garnish structure 20 of the invention, the resin-made garnish 21 is secured to the tailgate (vehicle body) 13 shown in Fig. 2 and functions as an exterior member of the tailgate 13. The resin-made garnish 21 includes a window section 31 formed by a transparent section 30, a blindfold section 33 formed by an opaque section 32, and a lamp-mounting section 36 integrally formed on the opaque section 32. The resin-made garnish 21 also includes a mounting section 34 integrally formed on the opaque section 32.

Namely, the resin-made garnish 21 is an elongated member generally comprising the transparent section 30 and opaque section 32 and extending in the width direction of the vehicle body.

As further shown in Fig. 3, the resin-made garnish 21 has a horizontal wall section 38 extending in a substantial horizontal direction from a lower end 18a of the tailgate windowpane 18 (see Fig. 2) toward the rear of the vehicle body, and a slanting wall section 39 extending rearwardly and downwardly from a rear end 38a of the horizontal wall section 38. The horizontal wall section 38 and slanting wall section 39 are formed integrally with each other.

Respective outer surfaces of the horizontal and slanting wall sections 38 and 39 constitute an entire area of an outer surface 21a of the resin-made garnish 21. In other words, the entire area of the outer surface 21a is formed by the transparent section 30 and constitutes part of the outer surface 13a (see Fig. 2) of the tailgate 13. The opaque section 32 is overlappedly provided on a part of the inner or reverse surface of the transparent section 30.

The transparent and opaque sections 30 and 32 are integrally formed of transparent and opaque resin materials, respectively, and these transparent and opaque resin materials may, for example, be polycarbonate materials.

With the opaque section 32 overlappedly provided on a part of the reverse surface of the transparent section 30, the remaining part of the transparent section 30, on which the opaque section 32 is not overlappedly provided, can be constructed as a transparent window section.

Further, because a partly-two-layered structure is provided by the opaque section 32 being overlappedly provided on a part of the reverse surface of the transparent section 30, the opaque section 32 can be minimized in area while securing its rigidity. Thus, the transparent window section can have a great area with the opaque section 32 minimized in area, so that areas behind the vehicle body can be viewed with an enhanced visibility through the window section of the garnish 21; that is, visibility through the.

Further, because the resin-made garnish 21 is constructed as the partly-two-layered structure comprising the transparent section 30 and opaque section 32 with the opaque section 32 overlappedly provided on a part of the reverse surface of the transparent section 30 as set forth above, it can have an enhanced rigidity.

Further, the transparent and opaque sections 30 and 32 are formed integrally with each other, so that the opaque section 32 can be formed simultaneously as the transparent section 30 is formed. Thus, there is no need to add a separate step to provide the opaque section 32 on the resin-made garnish 21; that is, it is possible to form the opaque section 32 without increasing the number of the manufacturing steps.

Further, in the instant embodiment, the blindfold section 33 is formed by the opaque section 32 overlappedly provided on a part of the reverse surface of the transparent section 30, while the window section 31 is formed by the remaining part of the reverse surface of the transparent section 30 (on which the opaque section 32 is not overlappedly provided).

As an example, the window section 31 includes a lamp window 31a provided in an upper portion of the slanting wall section 39, and a viewing window 31b provided in a substantial widthwise-middle portion (i.e., substantial middle portion in the width direction of the vehicle) of the slanting wall section 39. Entire area of an inner or reverse surface 21b of the resin-made garnish 21 is formed by the inner surface (i.e., surface facing toward the vehicle compartment) of the opaque section 32 and reverse surface of the window section 31. The transparent and opaque sections 30 and 32 are formed integrally with each other through, for example, two-color molding.

As viewed in plan, the slanting wall section 39 is curved arcuately so as to protrude rearwardly from left and right end portions of the resin-made garnish 21 toward the widthwise center of the vehicle body. Namely, the outer surface 21a of the resin-made garnish 21 is formed generally convexly and facing outwardly of the vehicle (body), while the inner or reverse surface 21b of the resin-made garnish 21 is formed generally concavely and facing toward the vehicle compartment (i.e., inwardly of the vehicle body).

The mounting section 34 is molded integrally with the opaque section 32 when the transparent and opaque sections 30 and 32 are formed through, for example, two-color molding. The mounting section 34 is provided for mounting the resin-made garnish 21 to the vehicle body 11. The mounting section 34 can be formed simultaneously with the formation of the resin-made garnish 21. Thus, there is no need to add a separate step to provide the mounting section 34. Further, because the mounting section 34 is formed integrally with the opaque section 32, there is no need to separately provide the mounting section 34, which can eliminate a need for increasing the necessary number of the component parts.

As seen in Figs. 3 and 4, the mounting section 34 includes an upper middle mounting seat portion 41 formed on a widthwise-middle portion 21c of the horizontal wall section 38; an upper left mounting seat portion 42 formed on the horizontal wall section 38 to the left of the upper middle mounting seat portion 41; an upper right mounting seat portion 43 formed on the horizontal wall section 38 to the right of the upper middle mounting seat portion 41; and three lower mounting seat portions 45 formed on a lower portion 39a of the slanting wall section 39.

The above-mentioned upper middle mounting seat portion 41, upper left mounting seat portion 42, upper right mounting seat portion 43 and lower mounting seat portions 45 support fastener members 79 and 88 in order to fasten or fix the resin-made garnish 21 to the vehicle body 11 by means of the fastener members 79 and 88.

One of the lower mounting seat portions 45 is located in a substantial middle portion, in the width direction of the vehicle, of the slanting wall section 39, and the other two lower mounting seat portions 45 are located on left and right portions, in the width direction of the vehicle, of the slanting wall section 39.

Because the upper middle mounting seat portion 41, upper left mounting seat portion 42, upper right mounting seat portion 43 and lower mounting seat portions 45 are provided integrally on the opaque section 32, the opaque section 32 can be reinforced with these mounting seat portions 41 - 43 and 45. In this way, it is possible to significantly enhance the rigidity of the opaque section 32 and hence the resin-made garnish 21, and each of the upper middle mounting seat portion 41, upper left mounting seat portion 42, upper right mounting seat portion 43 and lower mounting seat portions 45 can have an enhanced rigidity.

With the enhanced rigidity of the mounting seat portions 41 - 43 and 45, the resin-made garnish 21 can be strongly fixed to the vehicle body 11 by means of the fastener members 79 and 88; these fastener members 79 and 88 may be in the form of clips. Thus, the fastener members (such as clips) 79 and 88 can be used as means for tentatively fastening the resin-made garnish 21 to the vehicle body 11 during manufacturing. In this way, the step of mounting the resin-made garnish 21 to the vehicle body 11 can be readily performed without requiring much time and labor.

The mounting section 34 further includes left and right adhering members 63 and 64 along left and right end portions 24 and 25 of the opaque section 32 of the resin-made garnish 21. The left and right adhering members 63 and 64 have left and right adhering portions 51 and 52, respectively; these portions 51 and 52 function as adhering surfaces.

In addition, the mounting section 34 includes an upper adhering portion 53 provided on a front end region 38b of the horizontal wall section 38, and a lower adhering portion 54 provided on a lower end region 39a of the slanting wall section 39. The left and right adhering portions 51 and 52 and the upper and lower adhering portions 53 and 54 form a peripheral edge section 48 of the resin-made garnish 21; the peripheral edge section 48 forms an entire periphery of the reverse surface 21b of the resin-made garnish 21.

The left and right adhering portions 51 and 52 and upper and lower adhering portions 53 and 54 together constitute a first adhering section 50; namely, the first adhering section 50 is provided on and along the entire peripheral edge section 48 of the reverse surface 21b of the resin-made garnish 21.

The mounting section 34 further includes left and right second adhering sections 55 and 56 provided on the front end region 38b of the horizontal wall section 38, which are located on the reverse surface 21b of the garnish 21 adjacent to the widthwise-middle portion 21c of the horizontal wall section 38 and are separate from the first adhering section 50. Namely, the second adhering sections 55 and 56 are provided on a widthwise-middle portion (i.e., substantial middle portion in the width direction of the vehicle) of the resin-made garnish 21.

More specifically, the left second adhering section 55 is provided to the left of the upper middle mounting seat portion 41 and extends parallel to the upper adhering portion 53 of the first adhering section 50, and the right second adhering section 55 is provided to the right of the upper middle mounting seat portion 41 and extends parallel to the upper adhering portion 53.

The first adhering section 50 is provided for adhering the resin-made garnish 21 to the vehicle body 11 by means of an adhesive 60a, while the second adhering sections 55 and 56 are provided for adhering the resin-made garnish 21 to the vehicle body 11 by means of adhesives 60b.

Namely, in the vehicular garnish structure of the present invention, the mounting section 34 includes the first adhering section 50 and second adhering sections 55 and 56 that are adhered to the vehicle body 11 by means of the adhesive 60a and 60b, respectively; thus, the resin-made garnish 21 can be adhered appropriately to the vehicle body 11 by means of the adhesive 60a and 60b.

Note that, where the resin-made garnish 21 has a relatively great size and/or has a particular shape, the garnish 21 tends to vibrate in its widthwise-middle portion even though the peripheral edge section 48, i.e. first adhering section 50, of the garnish 21 is adhered to the vehicle body 11. This is why the second adhering sections 55 and 56 located near the widthwise-middle of the garnish 21 are also adhered to the vehicle body 11 at positions apart from the first adhering section 50; that is, the second adhering sections 55 and 56 can prevent the widthwise-middle portion of the resin-made garnish 21 from vibrating and thereby minimize noise sound that would be produced due to the vibration of the resin-made garnish 21.

The resin-made garnish 21 also tends to vibrate in its widthwise-middle portion due to its elongate shape extending in the width direction of the vehicle. Such vibration of the garnish 21 too can be effectively avoided by the second adhering sections 55 and 56 located near the widthwise-middle of the garnish 21.

Further, because the second adhering sections 55 and 56 extend parallel to the upper adhering portion 53 of the first adhering section 50, they can have sufficient lengths in the width direction. Thus, by just providing the second adhering sections 55 and 56 so as to extend parallel to part of the first adhering section 50, it is possible to secure a necessary length of adhesion to the vehicle body 11. As a result, the resin-made garnish 21 can be adhered appropriately to the vehicle body 11, so that unwanted vibration of the resin-made garnish 21 can be prevented efficiently.

Provision, at a plurality of positions, of the left and right second adhering sections 55 and 56 can adhere the resin-made garnish 21 to the vehicle body 21 even more appropriately with an increased strength.

Further, a space 59 is provided in the reverse side of the resin-made garnish 21, and a stop lamp 65, capable of emitting light rearwardly of the vehicle body, is accommodated in the space 59.

As best seen in Fig. 3, the lamp mounting section 36 is formed integrally with the opaque section 32 and includes left and right inner lamp mounting portions 57 and 58 located to the left and right, respectively, of the upper middle mounting portion 41 of the horizontal wall section 38. The lamp mounting section 36 also includes a left outer lamp mounting portion 61 located to the left of the left inner lamp mounting portion 57, and a right outer lamp mounting portion 62 located to the right of the right inner lamp mounting portion 58.

The left inner lamp mounting portion 57 is located rearwardly of the left second adhering section 55, while the right inner lamp mounting portion 58 is located rearwardly of the right second adhering section 56.

The left outer lamp mounting portion 61 and upper left mounting seat portion 42 are formed integrally with each other to constitute a left mounting member 46, while the right outer lamp mounting portion 62 and upper right mounting seat portion 43 are formed integrally with each other to constitute an integral right mounting member 47.

The stop lamp 65 is mounted to the lamp mounting section 36, i.e. to the left and right inner lamp mounting portions 57 and 58 and left and right outer lamp mounting portions 61 and 62 of the mounting section 36. The stop lamp 65 has a lens 66 located inwardly of the lamp window 31a in opposed relation to the window 31a, as shown in Fig. 4. Thus, light emitted from the stop lamp 65 is irradiated outwardly of the vehicle body 11 through the lamp window 31a.

Thus, by only mounting the stop lamp 65 to the mounting section 36, it is possible to accurately position the stop lamp 65 so that the emitted light from the lamp 65 illuminates the e lamp window 31a.

Such arrangements facilitate operation for mounting the lamp 65 to the resin-made garnish 21. Further, because the lamp mounting section 36 can be formed simultaneously with the formation of the resin-made garnish 21, there is no need to add a separate step to provide the lamp mounting section 36 on the resin-made garnish 21. Further, because there is no need to separately provide the lamp mounting section 36, the aforementioned arrangements can eliminate a need to increase the number of the component parts. As a result, the instant embodiment allows the stop lamp 65 to be appropriately mounted to the resin-made garnish 21 without increasing the necessary numbers of the manufacturing steps and component parts.

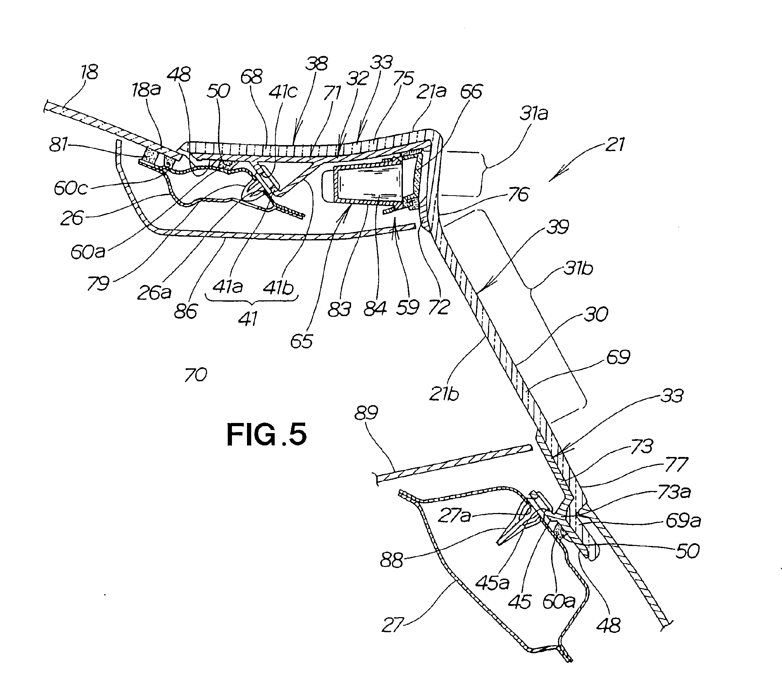

Fig. 5 is a sectional view taken along line 5 - 5 of Fig. 3, which particularly shows the resin-made vehicular garnish structure mounted on the vehicle body.

As shown, the resin-made garnish 21 is formed into a substantial "doglegged" (or substantial "L") sectional shape, which comprises the horizontal wall section 38 extending in a substantial horizontal direction toward the rear of the vehicle body 11 and the slanting wall section 39 extending downwardly and toward the rear of the vehicle body 11.

The convex outer surface 21a of the resin-made garnish 21 is formed by the outer surface of the transparent section 30, and it comprises a horizontal transparent surface portion 68 forming the surface of the horizontal wall section 38 and a slanting transparent surface portion 69 forming the surface of the slanting wall section 39. The horizontal transparent surface portion 68 and slanting transparent surface portion 69 together constitute a substantially-doglegged surface. The slanting transparent surface portion 69 has a lower-end stepped portion 69a that is an inwardly-concaved outer surface portion.

As noted above, the opaque section 32 is overlappedly provided on part of the reverse surface of the transparent section 30. More specifically, a horizontal opaque portion 71, upper opaque portion 72 and lower opaque portion 73 of the opaque section 32 are overlappedly provided on the reverse surface of the transparent section 30, to thereby provide a horizontal blindfold portion 75, upper blindfold portion 76 and lower blindfold portion 77 of the blindfold section 33.

With the horizontal blindfold portion 75, upper blindfold portion 76 and lower blindfold portion 77 provided in the aforementioned manner, the remaining part of the resin-made garnish 21, on which the opaque section 32 is not overlappedly provided, is constructed as the lamp window 31a and viewing window 31b.

Further, the lower opaque portion 73, overlappedly provided on the stepped portion 69a, forms a stepped portion 73a protruding toward the interior of the vehicle compartment 70.

The upper middle mounting seat portion 41 is formed on the inner surface of the horizontal opaque portion 71, and this upper middle mounting seat portion 41 includes front and rear inclined wall portions 41a and 41b to together form a substantial V sectional shape. These front and rear inclined wall portions 41a and 41b are integrally connected at their upper ends to the horizontal opaque portion 71, and a mounting hole 41c is formed in the front inclined wall portion 41a.

The front inclined wall portion 41a abuts against the above-mentioned middle upper frame member 26 of the tailgate frame 16, and the clip 79 is inserted through the mounting hole 41c of the front inclined wall portion 41a and mounting hole 26a of the middle upper frame member 26 so that the front inclined wall portion 41a is fixed to the middle upper frame member 26 via the inserted clip 79.

The first adhering section 50, provided on and along the peripheral edge section 48, of the resin-made garnish 21 is adhered to the middle upper frame member 26 of the vehicle body.

The middle upper frame member 26, adhesive 60a and upper middle mounting seat portion 41 are hidden by the horizontal blindfold portion 75 so as not to be visible from outside the vehicle.

The tailgate windowpane 18 has a lower end portion 18a placed on the middle upper frame member 26 via a seal member 81 and adhered to the middle upper frame member 26 by means of an adhesive 60c.

The above-mentioned space 59, provided in the reverse surface side of the resin-made garnish 21 and having the stop lamp 65 received therein, is located rearwardly of the upper middle mounting seat portion 41.

For example, the stop lamp 65 is in the form of a light emitting diode 84 accommodated in a case 83, and the lens 66 located inwardly of the lamp window 31a faces a light emitting surface of the light emitting diode 84. The stop lamp 65 is hidden by the horizontal blindfold portion 75 so as not to be visible from outside the vehicle.

The middle upper frame member 26, upper middle mounting seat portion 41, clip 79 and stop lamp 65 are covered with a lining member 86 so as not to be visible from inside the vehicle compartment 70.

The middle lower mounting seat portion 45 is formed integrally with the stepped portion 73a of the lower opaque portion 73. The lower mounting seat portion 45 projects obliquely upward from the stepped portion 73a and has a mounting hole 45a.

The lower mounting seat portion 45 abuts against the above-mentioned middle lower frame member 27 of the tailgate frame 16, and the clip 88 is inserted through the mounting hole 45a of the lower mounting seat portion 45 and mounting hole 27a of the middle lower frame member 27 so that the lower mounting seat portion 45 is fixed to the middle lower frame member 27 via the inserted clip 88.

The left and right lower mounting seat portions 45 shown in Fig. 3 are constructed similarly to the middle lower mounting seat portion 45 and mounted to the middle lower frame member 27 in a similar manner to the middle lower mounting seat portion 45.

The first adhering section 50, provided along the peripheral edge section 48, of the resin-made garnish 21 is adhered to the middle lower frame member 27 of the vehicle body by means of the adhesive 60a.

The middle lower frame member 27, adhesive 60a and lower mounting seat portion 45 are hidden by the lower blindfold portion 77 so as not to be visible from outside the vehicle.

Further, the middle lower frame member 27, lower mounting seat portion 45 and clip 88 are covered with a lining member 89 so as not to be visible from inside the vehicle compartment 70.

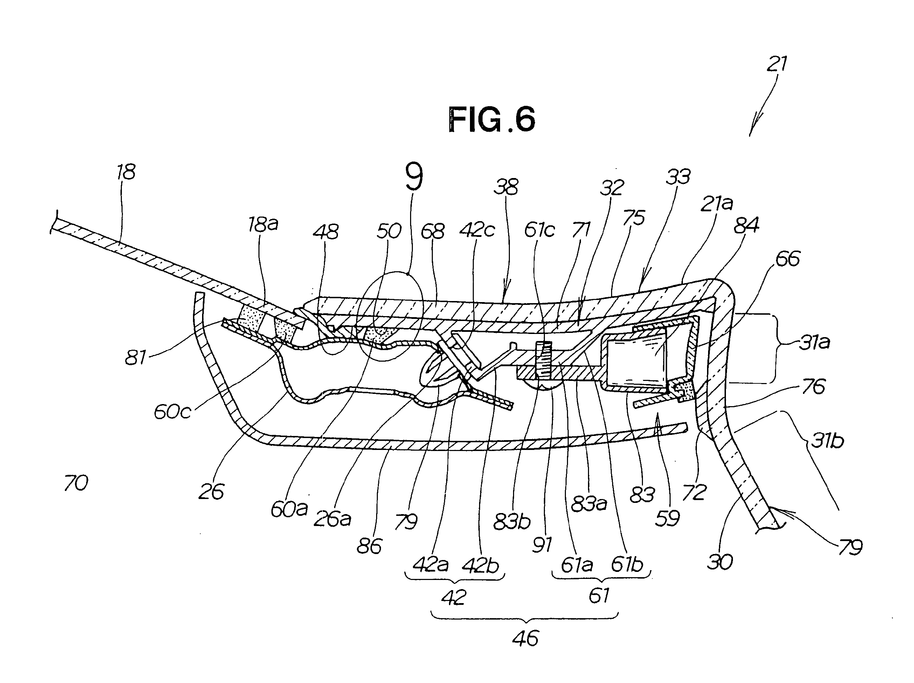

Fig. 6 is a sectional view taken along the 6 - 6 line of Fig. 3, which particularly shows the resin-made vehicular garnish structure mounted on the vehicle body.

As shown, the left mounting member 46, which is formed integrally with the reverse surface of the horizontal opaque portion 71, includes the upper left mounting seat portion 42 and left outer lamp mounting portion 61.

As seen in Figs. 4 and 5, the upper left mounting seat portion 42 includes front and rear inclined wall portions 42a and 42b to together form a substantial V sectional shape. The front inclined wall portion 42a is integrally connected at its upper end to the horizontal opaque portion 71, while the rear inclined wall portion 42b is integrally connected at its upper end to a horizontal portion 61a of the left outer lamp mounting portion 61. Mounting hole 42c is formed in the front inclined wall portion 42a.

The front inclined wall portion 42a of the upper left mounting seat portion 42 abuts against the above-mentioned middle upper frame member 26 of the tailgate frame 16, and the clip 79 is inserted through the mounting hole 42c of the front inclined wall portion 42a and mounting hole 26a of the middle upper frame member 26 so that the front inclined wall portion 42a is fixed to the middle upper frame member 26 via the inserted clip 79.

The upper right mounting seat portion 43 shown in Fig. 3 is constructed similarly to the upper left mounting seat portion 42 and mounted to the middle upper frame member 26 in a similar manner to the upper left mounting seat portion 42.

The left outer lamp mounting portion 61 includes the horizontal portion 61a extending substantially parallel to the horizontal opaque portion 71, and an inclined wall portion 61b extending obliquely upward from the rear end of the horizontal portion 61a. The horizontal portion 61a has a threaded hole 61c formed substantially centrally therein and is integrally connected at its front end to the upper end of the rear inclined wall portion 42b. The inclined wall portion 61b has its upper end integrally connected to the horizontal opaque portion 71.

Mounting portion 83a of the case 83 abuts against the above-mentioned horizontal portion 61a, a bolt 91 is inserted through a mounting hole 83b of the mounting portion 83a and the inserted bolt 91 is screwed into the threaded hole 61c, so that the mounting portion 83a of the case 83 is fastened to the horizontal portion 61a. The mounting portion 83a of the case 83 is mounted to the right outer lamp mounting portion 62 shown in Fig. 3, in a similar manner to the left outer lamp mounting portion 61.

The left mounting member 46, clip 79 and bolt 91 are hidden by the horizontal blindfold portion 75 so as not to be visible from outside the vehicle.

Further, the left mounting member 46, clip 79 and bolt 91 are covered with the lining member 86 so as not to be visible from inside the vehicle compartment 70.

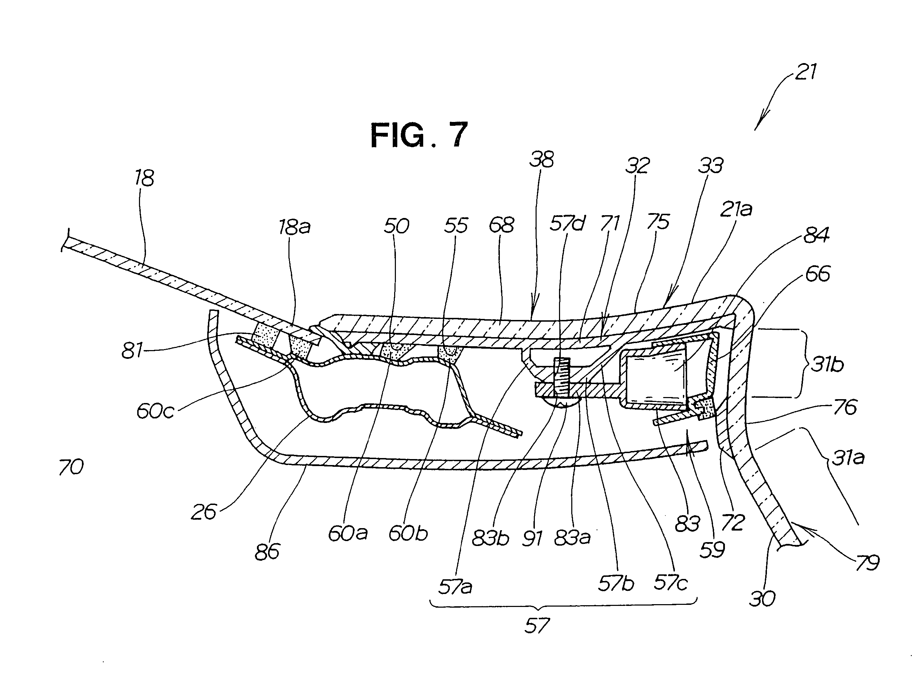

Fig. 7 is a sectional view taken along the 7 - 7 line of Fig. 3, which particularly shows the resin-made vehicular garnish structure mounted on the vehicle body.

As shown, the left inner lamp mounting portion 57, which is formed integrally with the inner surface of the horizontal opaque portion 71, includes a front wall portion 57a extending downward from the horizontal opaque portion 71, a horizontal portion 57b extending horizontally rearward from the front wall portion 57a, and an inclined wall portion 57c extending obliquely upward from the rear end of the horizontal portion 57b toward the rear of the vehicle body.

The front wall portion 57a is connected at its upper end to the horizontal opaque portion 71. The horizontal portion 57b has a threaded hole 57d formed substantially centrally therein, and the inclined wall portion 57c is also connected at its front end to the horizontal opaque portion 71.

The mounting portion 83a of the case 83 abuts against the above-mentioned horizontal portion 57b, a bolt 91 is inserted through the mounting hole 83b of the mounting portion 83a and the inserted bolt 91 is screwed into the threaded hole 57d of the horizontal portion 57b, so that the mounting portion 83a of the case 83 is fastened to the he horizontal portion 57b by means of the bolt 91. The mounting portion 83a of the case 83 is mounted to the right inner lamp mounting portion 58 shown in Fig. 3, in a similar manner to the left inner lamp mounting portion 57.

The left inner lamp mounting portion 57 and bolt 91 are hidden by the horizontal blindfold portion 75 so as not to be visible from outside the vehicle.

Further, the left inner lamp mounting portion 57 and bolt 91 are covered with the lining member 86 so as not to be visible from inside the vehicle compartment 70.

The first adhering section 50 is adhered to the middle upper member 26 by means of the adhesive 60a, and the left second adhering section 55 is located close to the widthwise middle of the resin-made garnish 21 and apart from the first adhering section 50 and adhered to the middle upper member 26 by means of the adhesive 60b.

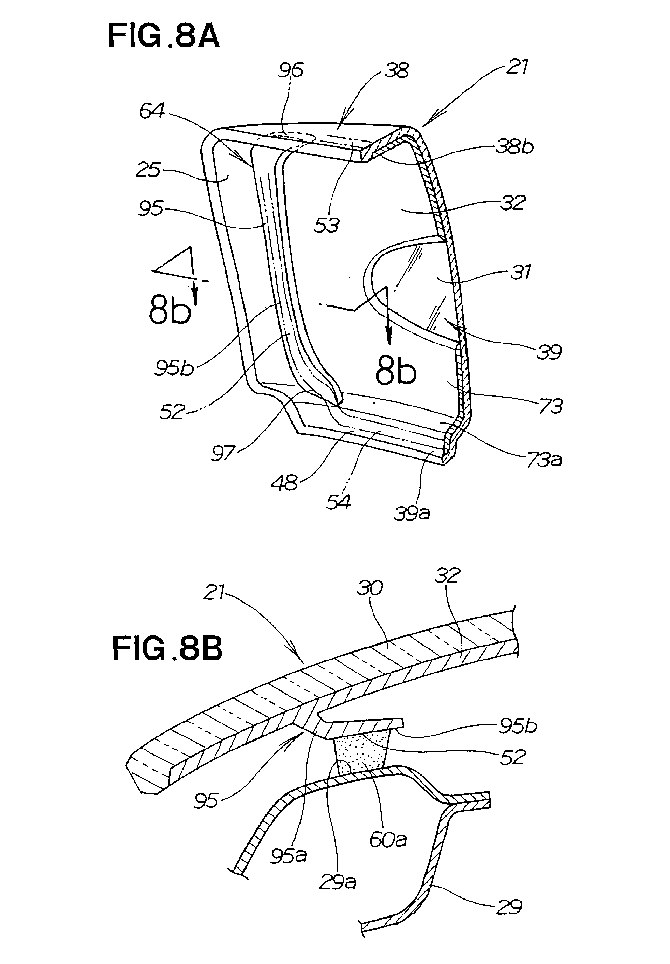

Fig. 8A is a fragmentary enlarged view of a right end structure section 8a shown in Fig. 3, and Fig. 8B is a sectional view taken along the 8b - 8b line of Fig. 8A.

In a region adjacent to the right end portion 25 (i.e., part of the peripheral edge section 48) of the resin-made garnish 21, the opaque section 32 includes the right adhering member 64. The right adhering member 64 includes an intermediate adhering portion 95 extending along the right end portion 25, upper adhering portion 96 extending along the horizontal wall section 38 from the upper end of the intermediate adhering portion 95, and lower adhering portion 97 extending along the stepped portion 73a from the lower end of the intermediate adhering portion 95 to the lower opaque portion 73.

As shown in Fig. 8B, the intermediate adhering portion 95 includes a base 95a extending, in a vertical direction of the vehicle body, along the right end portion 25, and an adhering portion 95b extending from the base 95a toward the widthwise middle of the vehicle. The adhering portion 95b is positioned parallel to an adhering surface 29a of the right frame member 29 shown in Fig. 2.

As shown in Fig. 8A, the upper adhering portion 96 lies along the front end region 38b of the horizontal wall section 38, so that the upper adhering portion 96 is bonded to the upper adhering portion 53 on the reverse surface of the horizontal wall section 38. The upper adhering portion 96 is positioned parallel to the adhering surface 29a of the right frame member 29 shown in Fig. 2.

The lower adhering portion 97 lies along the lower end portion 39b of the slanting wall section 39, so that the lower adhering portion 97 is bonded to the lower adhering portion 54 on the reverse surface of the lower end portion 39b. The lower adhering portion 97 is positioned parallel to the adhering surface 29a of the right frame member 29 shown in Fig. 2.

With the adhering portion 95b, upper adhering portion 96 and lower adhering portion 97 positioned parallel to the adhering surface 29a of the right frame member 29 as set forth above, the right adhering portion 52 of the right adhering member 64 faces the adhering surface 29a in parallel relation to the latter. In this way, the right adhering portion 52 is adhered to the adhering surface 29a of the right frame member 29 by means of the adhesive 60a.

The left and right adhering members 63 and 64 are formed horizontally symmetrical with each other. Thus, the left adhering portion 51 can be adhered to the adhering surface of the left frame member 28 by means of the adhesive 60a.

As described above in relation to Figs. 8A and 8B, the mounting section 34 includes the left and right adhering members 63 and 64 having the left and right adhering portions 51 and 52, respectively, and the left and right adhering portions 51 and 52 are adhered to the vehicle body 11 by means of the adhesive 60a.

Shape of the left and right adhering members 63 and 64 can be chosen relatively freely as long as the adhering members 63 and 64 can be provided to extend along the contour of the vehicle body 11. Thus, the resin-made garnish 21 can be appropriately adhered to the vehicle body 11 by the adhesive 60a using the adhering members 63 and 64.

As set forth above, the upper middle mounting seat portion 41, upper left mounting seat portion 42 and upper right mounting seat portion 43 are secured to the middle upper member 26 by means of the clips 79, and the middle lower mounting seat portion 45 and left and right lower mounting seat portions 45 are secured to the middle lower member 27 by means of the clips 88. In addition, the first adhering section 50 is adhered to the vehicle body 11 by means of the adhesive 60a, while the left and right second adhering sections 55 and 56 are adhered to the vehicle body 11 by means of the adhesives 60b.

With the aforementioned arrangements, the resin-made garnish 21 can be readily fixed to the vehicle body 11 in an appropriate manner with a sufficient strength.

Further, the stop lamp 65 is attached to the left and right outer lamp mounting portions 61 and 62 by means of the bolts 91 and to the left and right inner lamp mounting portions 57 and 58 by means of the bolts 91. Thus, the stop lamp 65 can be readily attached to the resin-made garnish 21 in an appropriate manner.

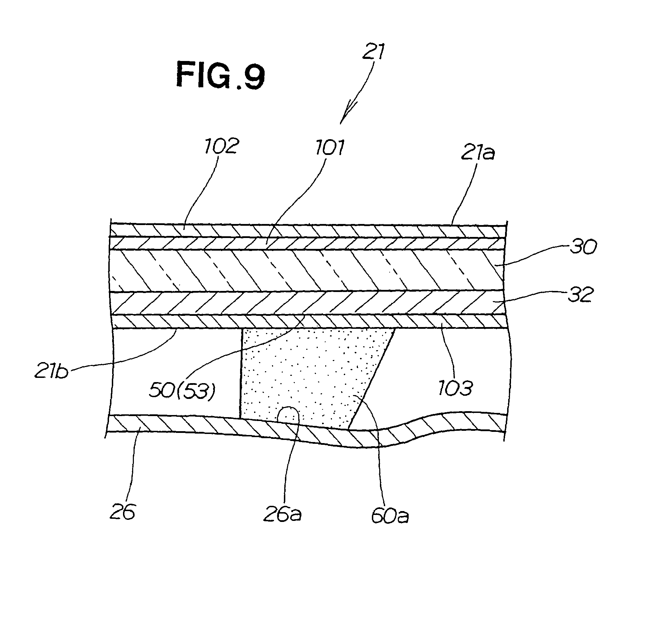

Fig. 9 is a fragmentary enlarged view of a section indicated at 9 in Fig. 6.

Although only the transparent and opaque sections 30 and 32 of the resin-made garnish 21 have been described above, as primary components of the resin-made garnish 21, in relation to Figs. 1 - 8, the garnish 21 also includes a protection layer etc. The protection layer will be described below with reference to Fig. 9 in conjunction with Figs. 3 and 4.

In the resin-made garnish 21 where the outer surface 21a of the transparent section 30 faces outwardly of the vehicle body, it is possible that the surface 21 will deteriorate due to exposure to rain, wind, etc. The concave inner surface 21b of the opaque section 32, on the other hand, faces inwardly toward the vehicle compartment 70 and thus will not be exposed to rain and wind.

Therefore, in the resin-made garnish 21 according to the instant embodiment, a coating primer layer 101 is formed on the surface of the transparent section 30, and a further surface-coating layer (hard coating layer) is formed on the primer layer 101. However, such surface-coating primer layers 101 and layer 102 are not formed on the inner surface of the opaque section 32.

Because the surface-coating layer 102 is formed only on the necessary portion as noted above, the instant embodiment can simplify the step of forming the coating layer 102.

Further, the first adhering section 50 and left and right second adhering sections 55 and 56, which are formed integrally with the opaque section 32 of the resin-made garnish 21, are made of a polycarbonate material as with the opaque section 32. If the adhesives 60a and 60b are applied to the polycarbonate material, the polycarbonate might liquefy with the adhesives 60a and 60b that are, for example, urethane adhesives.

To avoid the unwanted liquefying of the polycarbonate, a primer layer 103 for protecting from the adhesives 60a and 60b (hereinafter referred to as "adhesive-resistant primer layer") is formed on the inner surface of the opaque section 32. Further, a similar adhesive-resistant primer layer 103 is also formed on the adhering surfaces of the left and right adhering members 63 and 64 shown in Fig. 3.

Of the first adhering section 50, the upper and lower adhering portions 53 and 54 are provided on the opaque section 32. Thus, by forming the adhesive-resistant primer layer 103 on the opaque section 32, the adhesive-resistant primer layer 103 can be formed on the upper and lower adhering portions 53 and 54.

Further, the left adhering member 63 includes the left adhering portion 51 as its adhering surface, while the right adhering member 64 includes the right adhering portion 52 as its adhering surface. Adhesive-resistant primer layer 103 is also formed on the adhering portions 51 and 52 of the left and right adhering members 63 and 64.

The left and right adhering portions 51 and 52 and the upper and lower adhering portions 53 and 54 together constitute the first adhering section 50, as set forth above. Thus, the adhesive-resistant primer layer 103 can also be formed on the first adhering section 50.

The adhesive 60a is applied to the adhesive-resistant primer layer 103 formed on the first adhering section 50, and the first adhering section 50 is adhered, via the applied adhesive 60a, to the adhering surfaces 29a of the middle lower member 27, left frame member and right frame member 29 that are component parts of the vehicle body 11.

Further, with the left and right second adhering sections 55 and 56 and adhesive-resistant primer layer 103 provided on the opaque section 32, the primer layer 103 can be formed on the left and right second adhering sections 55 and 56 by forming the layer 103 on the opaque section 32. Further, the adhesive-resistant primer layer 103 is formed on the left and right second adhering sections 55 and 56 so that the adhesives 60b can be applied to the primer layer 103 with no significant inconvenience. The second adhering section 55 is adhered to the adhering surface of the middle upper member 26 by means of the applied adhesive 60b.

With the aforementioned arrangements, the adhesives 60a and 60b can be reliably prevented from contacting the polycarbonate-made opaque section 32 (i.e., first adhering section 51 and left and right second adhering sections 55 and 56) during the operation for attaching the resin-made garnish 21 to the vehicle body 11. Namely, the adhesives 60a and 60b can be interposed between the adhesive-resistant primer layer 103 and the vehicle body 11. Thus, the unwanted liquefying of the first adhering section 51 and left and right second adhering sections 55 and 56 can be reliably prevented, so that the adhesion, to the vehicle body 11, of the first adhering section 51 and left and right second adhering sections 55 and 56 can be kept in stable condition.

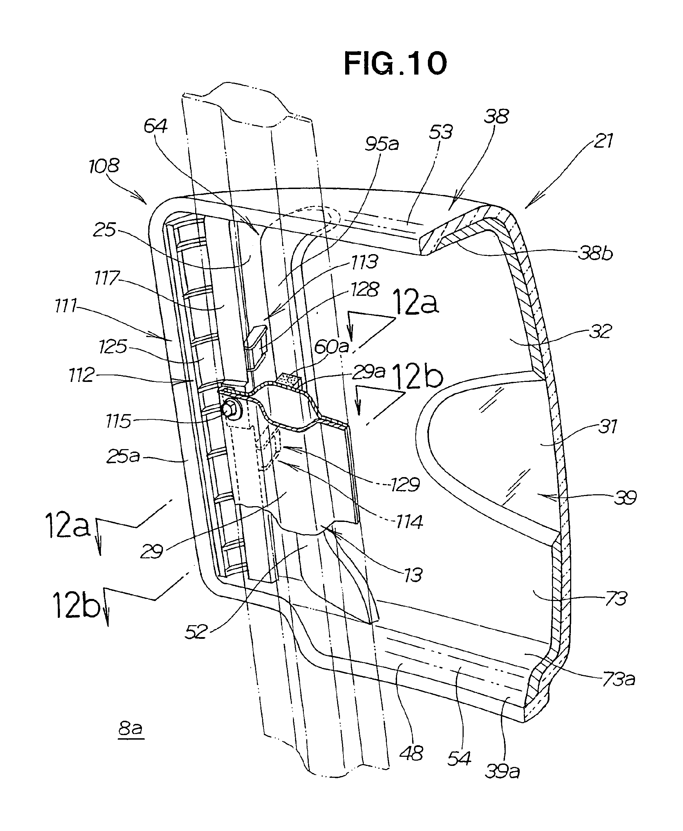

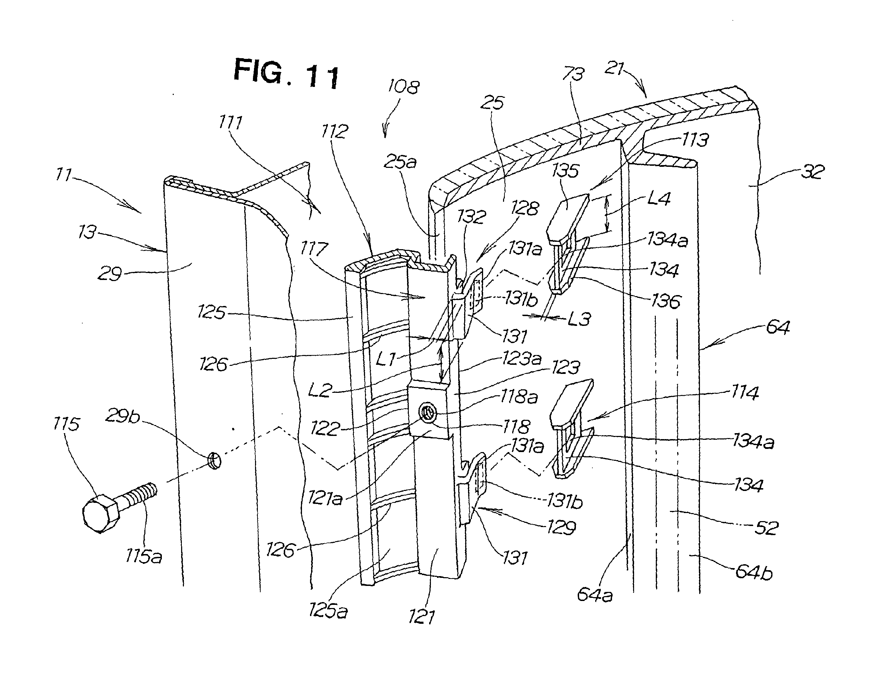

Fig. 10 is an enlarged view showing a second embodiment of the present invention, which particularly shows a modified embodiment of the detailed construction employed in the right end structure section 8a shown in Fig. 3, and Fig. 11 is an exploded perspective view of the right end structure section 8a.

The second embodiment is characterized by provision of attaching members 112 for securing the left and right longitudinal end portions 24 and 25 of the garnish 21 to the vehicle body 11.

Second mounting section 108 is provided, in addition to the aforementioned mounting section (i.e., first mounting section) 34, on the left and right longitudinal end portions 24 and 25 of the garnish 21 (only one of the second mounting sections 108 is shown in Figs. 10 and 11). The second mounting section 108 includes a left attachment section 110 provided outwardly of (i.e., to the left of) the left adhering member 63, and a right attachment section 111 provided outwardly of (i.e., to the right of) the right adhering member 64.

Along the right end portion (part of the peripheral edge section 48) 25 of the resin-made garnish 21, the right adhering member 64 is provided on the opaque section 32. The right adhering member 64 includes a base 64a extending, in the vertical direction of the vehicle body 11, along the right end portion 25, and an adhering portion 64b extending from the base 64a toward the widthwise middle of the vehicle. The above-mentioned right adhering portion 52 is provided on the surface of the adhering portion 64b.

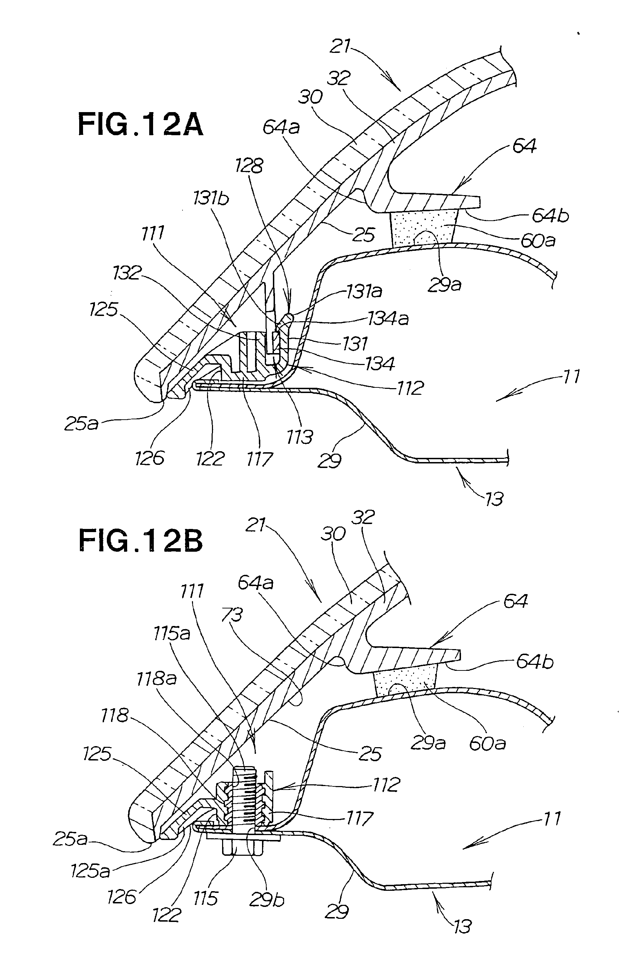

The adhering portion 64b is positioned parallel to the adhering surface 29a of the right frame member 29, so that the right adhering portion 52 is positioned parallel to the adhering surface 29a (see also Figs. 12A and 12B). Thus, the right adhering portion 52 can be adhered to the adhering surface 29a of the right frame member 29 by means of the adhesive 60a.

The aforementioned second mounting section 108 is explained in detail below. The left and right attachment sections 110 and 111 (Fig. 3) are formed horizontally symmetrically with each other, and thus, the following paragraphs representatively explain in detail the right mounting section 111 without detailing the left mounting section 110.

The right attachment section 111 of the second mounting section 108 is provided outwardly (i.e., to the right) of the right adhering member 64 on the right end portion 25 of the resin-made garnish 21.

The right mounting section 111 includes a right attaching member 112 provided separately from the longitudinal right end portion 25 of the garnish 21, right upper and right lower engagement portions 113 and 114 for fixing or attaching the right attaching member 112 to the resin-made garnish 21, and a bolt (screwing member) 115 for fastening or attaching the right attaching member 112 to the right frame member 29.

The right attaching member 112 includes an attachment section 117 extending vertically along the right end portion 25 and having a threaded hole 118a formed substantially centrally therein. The attachment section 117 has a bulging portion 125 on its outer wall portion 122 and upper and lower clips (i.e., engagement portions) 128 and 129 on its inner wall portion 123. As an example, the attachment section 117 includes a flat portion 121, outer wall portion 122 formed integrally with the outer side edge of the flat portion 121 and inner wall portion 123 formed integrally with the inner side edge of the flat portion 121, and the attachment section 117 is formed into a generally channel-like sectional shape with these portions.

The flat portion 121 of the attachment section 117 is a band-like portion extending vertically along the right end portion 25 and has an increased-thickness portion 121a formed on its substantial longitudinal middle region. Screw member 118 having the threaded hole 118a is embedded in the increased-thickness portion 121a through insert-molding or otherwise.

The bulging portion 125 has a plurality of reinforcing ribs 126 formed on its inner surface (facing toward the vehicle compartment) 125a and extending obliquely from the outer wall portion 122 close to a right edge 25a of the right end portion 2 5.

The upper and lower clips 128 and 129 are provided above and beneath the threaded hole 118a, respectively. The upper clip 128 has an arm portion 131 of a substantial L shape provided near the flat portion 121 of the inner wall portion 123, and a holding portion 132 facing the arm portion 131. The holding portion 132 is a protrusion projecting from a rear end 123a of the inner wall portion 123.

The arm portion 131 and holding portion 132 extend parallel to each other with a predetermined interval L1 therebetween, and these portions 131 and 132 each have a vertical width L2. The arm portion 131 has, in its distal end region 131a, an engaging claw 131b projecting toward the holding portion 132 (see also Fig. 12A). The lower clip 129 is shaped or constructed similarly to the above-described upper clip 128, and individual elements of the lower clip 129 are indicated by the same reference characters as those of the upper clip 128; thus, a detailed description about the lower clip 129 will be omitted to avoid unnecessary duplication.

The right upper engagement portion 113 is formed integrally with the lower opaque portion 73 of the right end portion 25. The right upper engagement portion 113 has an engaged plate portion 134 provided on the lower opaque portion 73 to extend vertically in parallel relation to the right edge 25a, and upper and lower stopper portions 135 and 136 provided on the top and bottom, respectively, of the engaged plate portion 134.

The engaged plate portion 134 has an engaging hole 134a formed substantially centrally therein, and the above-mentioned engaging claw 131b of the arm portion 131 engages this engaging hole 134a (see Fig. 12A).

The engaged plate portion 134 has a thickness L3 that is slightly smaller than the above-mentioned interval L1 between the arm portion 131 and the holding portion 132. Further, an interval L4 between the upper and lower stopper portions 135 and 136 is slightly greater than the vertical width L2 of the arm portion 131 and holding portion 132.

With the thickness L3 of the engaged plate portion 134 set slightly smaller than the interval L1 between the arm portion 131 and the holding portion 132 and the interval L4 between the upper and lower stopper portions 135 and 136 set slightly greater than the vertical width L2 of the arm portion 131 and holding portion 132 as noted above, the upper clip 128 can be fitted in the engaged plate portion 134, and the upper clip 128 can be prevented, by the upper and lower stopper portions 135 and 136, from being displaced vertically, so that the upper clip 128 can be retained at a desired position. The right lower engaged portion 114 is shaped or constructed similarly to the above-described right upper engagement portion 113, and individual elements of the right lower engaged portion 114 are indicated by the same reference characters as those of the right upper engagement portion 113; thus, a detailed description about the right lower engaged portion 114 will be omitted to avoid unnecessary duplication.

The bolt 115 is inserted through a mounting hole 29b of the right frame member 29 to cause its threaded portion 115a to be screwed into the threaded hole 118a. With the bolt 115 thus screwed in the threaded hole 118a, the right attaching member 112 is fastened to the right frame member 29. Note that, whereas the left and right attaching members 112 constructed in the aforementioned manner are provided along the left and right end portions 24 and 25 of the resin-made garnish 21, the attaching member 112 may be provided along only one of the left and right end portions 24 and 25 of the garnish 21; in such a case, the other of the left and right end portions 24 and 25 may be fixed directly to the vehicle body 11 by the adhesive. Therefore, the following description will be given focusing primarily on the right end structure section 8a, i.e. right attaching member 112.

The following paragraphs describe how to attach the resin-made vehicular garnish structure 20 to the tailgate 13 (i.e., vehicle body 11) in the second embodiment.

First, the elongated resin-made garnish 21 is formed into an elongated shape so as to extend along the outer surface 13a of the tailgate 13 (i.e., vehicle body 11), as illustratively shown in Fig. 3. Also, the right attaching member 112 is formed so as to extend vertically along the right end portion 25 having the right upper engagement portion 113 and right lower engagement portion 114 formed thereon.

In attaching the resin-made garnish 21 to the tailgate 13, the upper clip 128 of the right attaching member 112 is fitted into the engaged plate portion 134 of the right lower engagement portion 114, and the engaging claw 131b is cause to engage the engaging hole 134a. Simultaneously, the lower clip 129 of the right attaching member 112 is fitted into the engaged plate portion 134 of the right lower engagement portion 114, and the engaging claw 131b is cause to engage the engaging hole 134a. In this way, the right attaching member 112 can be attached to the right end portion 25 of the resin-made garnish 21 in such a manner that it extends vertically along the right end portion 25.

After that, the right attaching member 112 is fastened to the right frame member 29 by means of the bolt 115. In the above-described manner, the resin-made garnish 21 is attached at the two longitudinal end portions 24 and 25 to the left and right frame members 28 and 29 (namely, tailgate 13 or vehicle body 11) via the left and right attaching members 112. After that, the peripheral edge section of the garnish 21 is adhered, at its first adhering section 50, to the vehicle body 11, except where the attaching members 112 are provided.

However, in order to accomplish the object of the present invention, the resin-made garnish 21 may be attached only at one of the longitudinal end portions 24 or 25 to the vehicle body 11 via the attaching member 112 with the other longitudinal end portion 25 or 24 attached directly to the vehicle body 11 by means of the adhesive, as set forth above.

Because the resin-made garnish 21 is attached to the right frame member 29 via the right attaching member 112 constructed in the aforementioned manner, a manufacturing error of the resin-made garnish 21 can be absorbed by the left and right attaching members 112, using the resiliency of the resin-made garnish 21.

Thus, the right attaching member 112 can be positioned appropriately on the basis of the position and contour of the right frame member 29, and thus, the right attaching member 112 can be readily attached to the vehicle body without much time and labor taken. As a result, the operation for attaching the resin-made garnish 21 to the tailgate 13 (vehicle body 11) can be performed with ease within a short period of time.

Fig. 12A is a sectional view taken along the 12a - 12a line of Fig. 10, and Fig. 12B is a sectional view taken along the 12b - 12b line of Fig. 10.

As shown in Fig. 12A, the upper clip 128 of the right attaching member 112 is fitted into the engaged plate portion 134 of the right upper engagement portion 113, and the engaging claw 131b is cause to engage the engaging hole 134a. Similarly, the lower clip 129 of the right attaching member 112 is fitted into the engaged plate portion 134 of the right lower engagement portion 114, and the engaging claw 131b is cause to engage the engaging hole 134a (see Fig. 11). In this way, the right attaching member 112 is attached to the right end portion 25 of the resin-made garnish 21 in such a manner that it extends vertically along the right longitudinal end portion 25 of the garnish 21.

Namely, the right attaching member 112 is attached, via the upper and lower clips 128 and 129, to the resin-made garnish 21 at its two positions along the right end portion 25. In this way, deformation of the right end portion 25 of the garnish 21 can be prevented by the right attaching member 112. As a consequence, the right end portion 25 of the resin-made garnish 21 can be kept in an appropriate attached state fitting the shape of the tailgate 13 (i.e., vehicle body 11).

The right attaching member 112 is secured to the garnish 21 with the upper clips 128 and lower clip 129, provided on the right attaching member 112, engaging with the right upper engagement portion 113 and right lower engagement portion 114, respectively. In this way, the right attaching member 112 can be fixed to the garnish 21 with ease.

As shown in Fig. 12B, the bolt 115 is inserted through the mounting hole 29b of the right frame member 29 in such a manner that its threaded portion 115a projecting beyond the hole 29b is screwed in the threaded hole 118a. With the bolt 115 thus screwed in the threaded hole 118a, the right attaching member 112 is fastened to the right frame member 29. Namely, the right attaching member 112 is fixed only at its one position to the right frame member 29 (vehicle body 11) with utmost ease.

Further, with the arrangement that the right attaching member 112 is fixed to the right frame member 29 by means of the bolt 115, the right end portion 25 of the resin-made garnish 21 can be appropriately drawn (i.e., adjusted in position) toward the right frame member 29 by adjusting the tightening force of the bolt 115. In this way, the resin-made garnish 21 can be readily attached, via the attaching member 112, to the right frame member 29 without much time and labor taken.

With the arrangement that the resin-made garnish 21 is attached to the right frame member 29 (vehicle body 11) via the right attaching member 112, the resin-made garnish 21 can be readily attached to the vehicle body 11, without much time and labor taken, even in the case where the resin-made garnish 21 has a relatively complicated shape, with its outer surface 21a formed convexly generally and its reverse surface 21b formed concavely generally, and hence only small areas of adhesion to the vehicle body 11.

Whereas the first embodiment of the present invention has been described above as including the second adhering section at two positions (i.e., left and right second adhering sections 55 and 56), the second adhering section may be provided at only one position or at three or more positions.

Further, whereas the preferred embodiment has been described above as including the stop lamp 65 as the light-emitting member for attachment to the resin-made garnish 21, the present invention is not so limited, and the light-emitting member may be a parking lamp or the like rather than the stop lamp.

Furthermore, whereas the preferred embodiment has been described above as including the clips 79 and 88 as the fastener members for fastening the resin-made garnish 21 to the vehicle body, the present invention is not so limited, and bolts and/or the like may be used as the fastener members.

Furthermore, the left and right adhering members 63 and 64 may be formed into any desired shape matching the contour of the vehicle body.

Furthermore, the shapes of the upper middle mounting seat portion 41, upper left mounting seat portion 42, upper right mounting seat portion 43 and lower mounting seat portions 45 may be chosen as desired in accordance with the contour of the vehicle body.

Furthermore, the shapes of the left and right outer lamp mounting portions 61 and 62 and the left and right inner lamp mounting portions 57 and 58 may be chosen as desired in accordance with the contour of the vehicle body.

It should also be noted that the shape of each of the attaching members 112 employed in the second embodiment may be modified as desired in accordance with the shapes of the resin-made garnish 21 and vehicle body 11 without being limited to the one shown and described above.

Further, whereas the resin-made garnish 21 has been described above as an elongated member extending in the width (i.e., left-right) direction of the vehicle body, the present invention is not so limited, and the resin-made garnish 21 may be an elongated member extending in the length (i.e., front-rear) direction or other direction.

Furthermore, whereas the second embodiment has been described above in relation to the case where the attaching member 112 is fixed to the frame member by means of the bolt 115, the present invention is not so limited, and any other type of screw member than the bolt 115 may be used. Namely, according to the present invention, the screw member only has to have a threaded portion such that the end portion 24 or 25 of the resin-made garnish 21 can be appropriately drawn toward the frame member of the vehicle body by adjusting the tightening force of the fixation member. Alternatively, the screw member may be replaced with any other suitable type of fastener member, such as a clip.

Furthermore, whereas the second embodiment has been described above in relation to the case where each of the attaching members 112 is fixed to the garnish 21 at its two positions along the end potion 24 or 25 using the upper and lower clips 128 and 129, the present invention is not so limited, and the attaching member 112 may be fixed to the garnish 21 at its three or more positions.

The present invention arranged in the above-described manner is very suitable for use in vehicles provided with a resin-made garnish for attachment to the vehicle body as an exterior member.

Resin-made garnish (21) has a convex outer surface (21a) and a concave reverse surface (21b). First adhering section (50) is provided on and along a peripheral edge section of the reverse surface and attached to a vehicle body by an adhesive (60a), and a second adhering section (55, 56) is attached to the vehicle body by an adhesive (60b) separately from the first adhering section. The garnish is formed into an elongated shape to extend along the outer surface of the vehicle body. Attaching member (112) is attached to a longitudinal end portion (25) of the garnish and vehicle body along the garnish's end portion. Thus, the garnish is attached to the vehicle body via the attaching member.

## Claims

1. A resin-made vehicular garnish structure (20) including a resin-made garnish (21) for attachment to a vehicle body (11) as an exterior member,
**characterized in that** said resin-made garnish (21) has an outer surface (21a) formed convexly and facing outwardly of the vehicle body and a reverse surface (21b) formed concavely and facing inwardly of the vehicle body,
said resin-made garnish (21) has a first adhering section (50) provided on and along a peripheral edge section (48) of the reverse surface (21b) of the garnish, said first adhering section (50) being attached to the vehicle body by means of an adhesive (60a), and
said resin-made garnish (21) has a second adhering section (55, 56) attached to the vehicle body by means of an adhesive (60b) at a position apart from said first adhering section (50) provided on the peripheral edge section (48).

2. The resin-made vehicular garnish structure of claim 1, wherein said resin-made garnish (21) is an elongated member extending in a width direction of the vehicle body, and said second adhering section (55, 56) is provided on a substantial middle portion, in the width direction, of said resin-made garnish.

3. The resin-made vehicular garnish structure of claim 1 or 2, wherein said second adhering section (55, 56) extends substantially parallel to part of said first adhering section (50).

4. The resin-made vehicular garnish structure of any one of claims 1 - 3, wherein said second adhering section (55, 56) is provided at a plurality of positions of said resin-made garnish.

5. The resin-made vehicular garnish structure of any one of claims 1 - 4, wherein said resin-made garnish (21) is formed of polycarbonate,
said resin-made garnish has a surface-coating primer layer (101) and surface-coating layer (102) formed thereon,
said resin-made garnish (21) further has an adhesive-resistant primer layer (103) formed on each of the first and second adhering sections (50, 55, 56), and
the adhesives (60a, 60b) are interposed between said adhesive-resistant primer layer (103) and the vehicle body (11).

6. A resin-made vehicular garnish structure (20) including a resin-made garnish (21) for attachment to a vehicle body (11) as an exterior member,
**characterized in that** said resin-made garnish (21) is formed into an elongated shape so as to extend along an outer surface of the vehicle body,
said resin-made vehicular garnish structure (20) includes an attaching member (112) formed, separately from said resin-made garnish, for attachment to a longitudinal end portion (25) of said resin-made garnish and to the vehicle body, said attaching member (112) being formed to extend along the longitudinal end portion (25) of said resin-made garnish, and
said resin-made garnish (21) is attached to the vehicle body (11) via said attaching member (112).

7. The resin-made vehicular garnish structure (20) of claim 6, wherein said attaching member (112) is attached, at a plurality of positions thereof along the longitudinal end portion, to said resin-made garnish (21) and attached, at one other position thereof, to the vehicle body (11).

8. The resin-made vehicular garnish structure (20) of claim 6 or 7, **characterized in that** said attaching member (112) is attached to the vehicle body (11) by means of a screw member (115).

9. The resin-made vehicular garnish structure (20) of any one of claims 6 - 8, wherein said attaching member (112) has an engagement portion (128, 129) engaging with said resin-made garnish (21), and
said attaching member is attached to said resin-made garnish by said engagement portion being caused to engage with said resin-made garnish.

10. The resin-made vehicular garnish structure (20) of any one of claims 6 - 9, wherein said resin-made garnish (21) has an outer surface (21a) formed generally convexly and facing outwardly of the vehicle body, and a reverse surface (21b) formed generally concavely and facing inwardly of the vehicle body.

11. A method for attaching a resin-made vehicular garnish structure (20) including a resin-made garnish (21) for attachment to a vehicle body (11) as an exterior member, comprising the steps of:
forming said resin-made garnish (21) into an elongated shape so as to extend along an outer surface of the vehicle body;
forming an attaching member (112), separately from said resin-made garnish, so as to extend along a longitudinal end portion (25) of said resin-made garnish (21);
attaching said attaching member (112) to said resin-made garnish (21) along the longitudinal end portion; and
attaching said attaching member (112) to the vehicle body to thereby attach said resin-made garnish (21) to the vehicle body via said attaching member.
